Europäisches Patentamt

European Patent Office

Office européen des brevets

(11) Veröffentlichungsnummer: **0 220 499**
**A2**

(12) **EUROPÄISCHE PATENTANMELDUNG**

(21) Anmeldenummer: 86113163.9

(22) Anmeldetag: 24.09.86

(51) Int. Cl.⁴: **G01F 23/28**

(30) Priorität: 31.10.85 DE 3538740

(43) Veröffentlichungstag der Anmeldung:
06.05.87 Patentblatt 87/19

(84) Benannte Vertragsstaaten:
**DE FR GB SE**

(71) Anmelder: **VDO Adolf Schindling AG**
**Gräfstrasse 103**
**D-6000 Frankfurt/Main(DE)**

(72) Erfinder: **Ziegler, Klaus**
**Am Hofrain 8**
**D-7743 Furtwangen 6(DE)**
Erfinder: **Liebl, Reiner**
**Schützenstrasse 17**
**D-6231 Schwalbach(DE)**

(74) Vertreter: **Klein, Thomas, Dipl.-Ing. (FH)**
**Sodener Strasse 9 Postfach 6140**
**D-6231 Schwalbach a. Ts.(DE)**

(54) Einrichtung zur Erfassung des Füllstandes in einem Behälter.

(57) Bei einer Einrichtung zur Erfassung des Füllstandes eines Behälters, die eine von einem elektromechanischen Wandler (4) in Schwingungen versetzbare Membran (5) hat, ist die Membran (5) mit einer Beschichtung (6) versehen, die das Anhaften von Luft-und Gasblasen verhindert. Dadurch wird eine Fehlerfassung des Füllstandes durch angelagerte Blasen vermieden.

EP 0 220 499 A2

## Einrichtung zur Erfassung des Füllstandes in einem Behälter

Die Erfindung bezieht sich auf eine Einrichtung zur Erfassung des Füllstandes von insbesondere einer Flüssigkeit in einem Behälter, mit einer Membran, welche mit einer Seite dem Meßmedium zugewandt ist und die auf ihrer anderen Seite einen elektromechanischen Wandler hat, durch den die Membran in Schwingungen versetzbar ist.

Solche Einrichtungen werden zum Beispiel in Kraftfahrzeugtanks eingesetzt, um bei Unterschreiten eines Mindestfüllstandes ein Warnsignal erzeugen zu können. Die Wirkung dieser Einrichtungen beruht darauf, daß die Schwingungen der Membran durch die auf sie wirkende Flüssigkeit gedämpft werden. Das unterschiedliche Schwingungsverhalten bei Vorhandensein oder Fehlen von Flüssigkeit wird in einer Auswerteinrichtung erfaßt, so daß das gewünschte Warnsignal erzeugt werden kann.

In Kraftfahrzeugtanks und auch in anderen Behältern tritt das Problem auf, daß beim Einfüllen von Flüssigkeit, insbesondere beim erstmaligen Befüllen, relativ viel Luft und Gas in die Flüssigkeit gelangt. Gas-oder Luftblasen können sich dann auf der der Flüssigkeit zugewandten Seite der Membran absetzen, was dazu führt, daß die Membran leichter schwingen kann, als wenn sie vollständig von der Flüssigkeit abgedeckt wäre. Es kommt dann leicht zu einem Fehlalarm.

Bei der Füllstandsmessung von Öl mit solchen Einrichtungen treten oftmals dadurch Meßfehler auf, daß sich auf der Membran feine Öltröpfchen absetzen, die die Schwingung dämpfen und deshalb einen bis zur Membran reichenden Füllstand vortäuschen.

Der Erfindung liegt die Aufgabe zugrunde, eine Einrichtung der eingangs genannten Art zu - schaffen, bei der die Gefahr einer Fehlanzeige infolge des Anlagerns von Luft-oder Gasblasen oder Flüssigkeitströpfchen an der Membran vermieden ist.

Diese Aufgabe wird erfindungsgemäß dadurch gelöst, daß die Membran außenseitig mit einer das Anhaften von Gas-und Luftblasen und/oder Flüssigkeitströpfchen verhindernden Beschichtung versehen ist.

Durch diese einfache erfindungsgemäße Gestaltung können die in dem Meßmedium aufsteigenden Luft-und Gasblasen nicht mehr an der Membran haften. Dadurch ist ein Anlagern der Gas-und Luftblasen an der Membran und mithin ein Fehlalarm der Einrichtung durch einen solchen Vorgang ausgeschlossen. Kostenmäßig hat die Beschichtung kaum Bedeutung, so daß sich dieser Vorteil ohne nennenswerte Mehrkosten gegenüber herkömmlichen Einrichtungen erzielen läßt.

Da infolge der antiadhesiven Wirkung der Beschichtung auch Flüssigkeitströpfchen nicht an der Membran haften, eignet sich die erfindungsgemäße Einrichtung auch zur Ölstandsmessung. Die Beschichtung muß dem jeweiligen Meßmedium angepaßt sein. Soll beispielsweise der Füllstand von Wasser gemessen werden, dann ist in erster Linie darauf zu achten, daß keine Gasblasen auf der Membran haften können. Für Ölstandsmessungen ist die Beschichtung so zu wählen, daß Öl von ihr gut ablaufen kann. Auch für unterschiedliche Kraftstoffe kann die Beschichtung jeweils angepaßt werden.

Bei den bisher bekannten Einrichtungen hat man die Membran so groß bemessen, daß der Einfluß von an ihr anhaftenden Flüssigkeitströpfchen vernachlässigbar war. Dank der erfindungsgemäßen antiadhesiven Beschichtung kann man die Membran wesentlich kleiner ausbilden.

Besonders kostengünstig ist die Beschichtung, wenn sie aus ungesintertem Polytetraflurethylen besteht.

Möglich ist es jedoch auch, gesintertes Polytetrafluorethylen zu verwenden.

Das kann auf sehr einfache Weise durch Eintauchen in Benzin erfolgen. Wird die erfindungsgemäße Einrichtung zur Erfassung des Füllstandes in einem Kraftstoffbehälter verwendet, dann kommt die Beschichtung ohnehin ständig mit dem Kraftstoff und damit mit einem organischen Lösungsmittel in Berührung.

Eine andere, vorteilhafte Ausführungsform der Erfindung besteht darin, daß die Beschichtung in Form einer Folie auf die Membran aufgebracht ist.

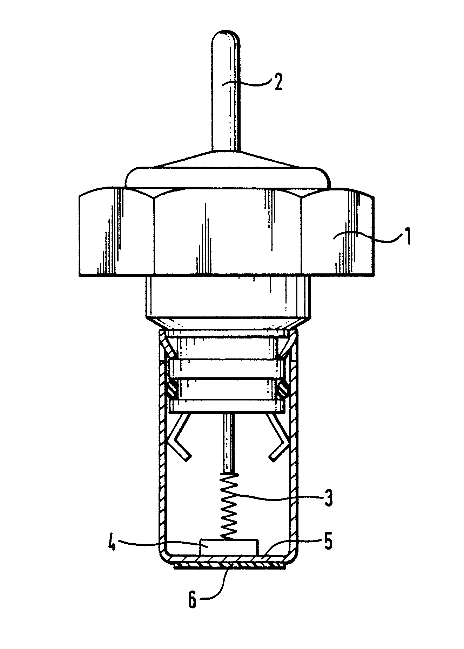

Die Erfindung läßt zahlreiche Ausführungsformen zu. Eine davon ist in der Zeichnung dargestellt und wird nachfolgend beschrieben. Die Zeichnung zeigt einen teilwei sen Längsschnitt durch die erfindungsgemäße Einrichtung.

Die dargestellte Einrichtung weist eine Halterung 1 auf, mit der die Einrichtung an einer nicht dargestellten Wand eines Flüssigkeitsbehälters befestigbar ist. An der Halterung 1 ist ein nach außerhalb des Flüssigkeitsbehälters ragender elektrischer Anschluß 2 angeordnet, der über eine flexible, elektrische Leitung 3 mit einem elektromechanischen Wandler 4 verbunden ist, bei dem es sich üblicherweise um ein Piezoelement handelt. Im eingebauten Zustand ragt der zum elektromechanischen Wandler 4 gerichtete Teil der Einrichtung in den Flüssigkeitsbehälter. Der Wandler 4 ist fest auf der Innenseite einer Membran 5 angeordet, deren Außenseite der Flüssigkeit zugewandt ist.

Für die Erfindung wichtig ist eine Beschichtung 6 auf der Außenseite der Membran 5, durch die ein Anhaften von Gas-und Luftblasen verhindert wird. Bei dieser Beschichtung 6 kann es sich um eine aufgeklebte Folie handeln. Als Werkstoff für die Beschichtung kommt gesintertes oder ungesintertes Polytetrafluorethylen in Frage. Bei gesintertem Polytetrafluorethylen muß auf die Beschichtung ein organisches Lösungsmittel aufgebracht werden, was jedoch bei Anwendung der Einrichtung in Kraftstofftanks kein Problem darstellt.

**Ansprüche**

1. Einrichtung zur Erfassung des Füllstandes von insbesondere einer Flüssigkeit in einem Behälter, mit einer Membran, welche mit einer Seite dem Meßmedium zugewandt ist und die auf ihrer anderen Seite einen elektromechanischen Wandler hat, durch den die Membran in Schwingungen versetzbar ist, dadurch gekennzeichnet, daß die Membran (5) außenseitig mit einer das Anhaften von Gas-und Luftblasen und/oder Flüssigkeitströpfchen verhindernden Beschichtung (6) versehen ist.

2. Einrichtung nach Anspruch 1, dadurch gekennzeichnet , daß die Beschichtung (6) aus ungesintertem Polytetrafluorethylen besteht.

3. Einrichtung nach Anspruch 2, dadurch gekennzeichnet, daß die Beschichtung (6) aus gesintertem Polytetrafluorethylen besteht.

4. Einrichtung nach einem oder mehreren der vorangehenden Ansprüche, dadurch gekennzeichnet, daß die Beschichtung (6) in Form einer Folie auf die Membran (5) aufgebracht ist.